# EUROPEAN PATENT SPECIFICATION

(11) **EP 3 241 126 B1**
(45) Date of publication and mention of the grant of the patent: **16.09.2020**
(21) Application number: 15823225.6
(22) Date of filing: 08.12.2015
(51) Int. Cl.: G06F 16/40, G06F 16/783

(54) **METADATA MANAGEMENT FOR CONTENT DELIVERY**
METADATEN MANAGEMENT FÜR DIE LIEFERUNG VON MEDIENINHALTEN
ADMINISTRATION DES DONNÉES POUR LA LIVRAISON DES CONTENUS MEDIA

(30) Priority: 31.12.2014 US 201414588224
(43) Date of publication of application: 08.11.2017
(73) Proprietor: OpenTV, Inc., San Francisco, CA 94111 (US)
(72) Inventor: TEIXEIRA, John Michael, San Francisco, California 94111 (US); DOERRING, Nicholas Daniel, San Francisco, California 94111 (US); STAUNTON-LAMBERT, Kevin, San Francisco, California 94111 (US); SZYMANSKI, Steven J., San Francisco, California 94111 (US)
(74) Representative: Schwegman Lundberg Woessner Limited
(86) International application number: PCT/US2015/064541
(87) International publication number: WO 2016/109131

(56) References cited:
- WO-A2-2007/130472
- WO-A2-2012/135804

## Description

### DESCRIPTION OF THE RELATED ART

This disclosure relates generally to the field of digital content for the delivery of video, audio and multi-media content, and more specifically to methods and systems for the delivery of supplementary content that may be of interest to a receiver of a primary content.

Traditional media includes, for example, broadcast television, cinema, physical supports for audio recording and playback, and so forth. These industries have the ability to store, transmit, deliver, and play back content of interest to wider ranges of audiences by digital means. Various forms of media content are available including traditional broadcast technologies, satellite transmission, cable delivery systems, cellular transmission systems, Internet delivery systems, as well as a range of physical memory supports for receiving, storing and playing back content.

While scheduled broadcasts and programming may be known, increasingly users make use and draw content from an increasingly wide range of sources, on an increasingly wide range of device platforms and device types, and much of the content is not enjoyed during a known programming schedule. Information about media *(e.g.* movies, TV shows, music, podcast, web video, etc.) can be synchronized with the media's playback so contextually and temporally relevant data can be displayed at appropriate times.

WO2007/130472A2 (Gotuit Media Corp) discloses a method and apparatus for providing "media assets" over a network in which first metadata is generated which includes text describing contents displayed when a first video asset is played and a pointer to a location within a video file that corresponds to the first video asset. The pointer includes at least two of a start location, an end location, and a duration. The first metadata is transmitted to a client system to play the first video asset. The client system displays portions of the text of the first metadata and uses the pointer to facilitate requesting the video asset from a video server.

WO2012/135804A2 (Mixaroo Inc) concerns a system in which video content is segmented in real-time into clips by topic. The clips are delivered as customized queues of video items relevant to the consumer according to their interests as obtained from their social graph data and from manual entry.

According to the present invention, there is a computer system according to appended claim 1 and a computerized method according to appended claim 9. The object of the invention is solved by the features of the independent claims. Further embodiments are the subject-matter of the dependent claims.

### BRIEF DESCRIPTION OF THE DRAWINGS

Embodiments are illustrated by way of example and not limitation in the figures of the accompanying drawings, in which like references indicate similar elements and in which:
FIG. 1 is a sample plot of data density across a timeline of a piece of media;
FIG. 2 illustrates contextual ambiguity in media having common segments;
FIG. 3 is a chart of a sample linking relationship between information from two different movies;
FIG. 4 is an example of fact applicable to a certain set of media having common segments;
FIG. 5 illustrates retrieval of irrelevant or confusing facts derived from a chart of linking relationships;
FIG. 6 is a sample chart of linking relationships between media with tiered nodes;
FIG. 7 is a sample of linking relationships organized in a tree-like chart;
FIG. 8 is a digraph with traversal costs applied;
FIG. 9 illustrates a sample supplementary content delivery system;
FIG. 10 is a system diagram of an environment in which at least one of the various embodiments may be implemented;
FIG. 11 shows an embodiment of a client computer that may be included in a system such as that shown in FIGS. 9 and 10;
FIG. 12 shows an embodiment of a network computer that may be included in a system such as that shown in FIGS. 9 and 10;
FIG. 13 illustrates a plurality of databases that may be included in a system such as that shown in FIGS. 9 and 10.

### DETAILED DESCRIPTION

The following detailed description includes references to the accompanying drawings, which form a part of the detailed description. The drawings show illustrations in accordance with exemplary embodiments. These exemplary embodiments, which are also referred to herein as "examples," are described in enough detail to enable those skilled in the art to practice the present subject matter. The embodiments can be combined, other embodiments can be utilized, or structural, logical, and electrical changes can be made without departing from the scope of what is claimed. The following detailed description is, therefore, not to be taken in a limiting sense, and the scope is defined by the appended claims.

Described are embodiments for the delivery of additional or supplementary information and content based upon a primary content that is transmitted, stored or played back on a device, such as a television, handheld device, computer, smart phone, and so forth.

In the delivery of supplementary content to reproduction of content, the supplementary content may be related in some meaningful way to the primary content being enjoyed by the users. For example, systems have been developed which can determine a channel currently tuned on a user's receiver, such as the television, and can provide content based upon such knowledge and knowledge of scheduled programming on the channel. However, users may receive media content on various devices and at user-selected times. In this case, it may not be known what the user is watching because the program is not being broadcast at a scheduled time or even to a known media player.

In various embodiments, the same or a separate media player can have a resident program that coordinates the selection of supplementary data from an external source based on determination of features of the presently reproduced media content. The resident program can sample data from the reproduced content and transmit that sample data to a server. Based on the sample data, the server can identify where in a data library the identified sample also exists. In this way it is not necessary to determine a time line of the media content being reproduced.

In some systems, a sample is taken to determine the primary content being displayed. Once the primary content is displayed a time line of the scenes is known and content is provided or included based on the known timeline. However, in various embodiments, in the present system it is not necessary to know the time line of the content. In various embodiments, the present system can provide supplemental data during a time period of the reproduced content based on a sampling of the simultaneously displayed content. For example, once a feature of a sample, for example a particular song, is identified, the present system can provide supplemental data for the time interval during which that song is being reproduced. That is, the sample can be used to determine a length of time in which supplemental data can be provided. A subsequent sample can, similarly, determine another interval needing supplemental data without identifying the time line of the media content being reproduced.

Briefly stated, various embodiments are directed to a computer system, computerized method, and computer programs for providing content. The system can comprise one or more processors operative to execute instructions; an operative connection to a plurality of databases and non-transitory memory operatively coupled to at least one of the including computer executable instructions; the one or more processors programmed at least to, when the program memory instructions are executed by the processors, identify context data for a particular segment associated with primary media content; search a graph of relationships between the context data for the primary media content and context data of other digital content; select a fact concerning the other digital content based on a relevance factor; and provide the fact to a content display device.

In at least one of various embodiments identifying the context data can comprise: obtaining a signature sample of primary media content; comparing the signature sample of the primary media content against a signature database to identify at least one or more segments for associated with the signature; selecting a particular segment of the primary media content; and identifying the context data for the particular segment.

In at least one of various embodiments the particular segment can be determined from a lull factor associated with the particular segment based on a data density of the particular segment. The graph of the relationships can nodes storing the fact concerning the other digital content and edges storing the relationships. The relevance factor can be based on a weighting factor associated with the nodes, or the relevance factor can be based on a weighting factor associated with the edges. A combined focal node can be associated with more than one focal node, each focal node being related to the combined focal node by one degree on the graph. The fact can be selected from a particular node based upon one or more rules. The one or more rules can include a rule that the graphical distance between the particular node and another node is less than a predetermined distance on the graph.

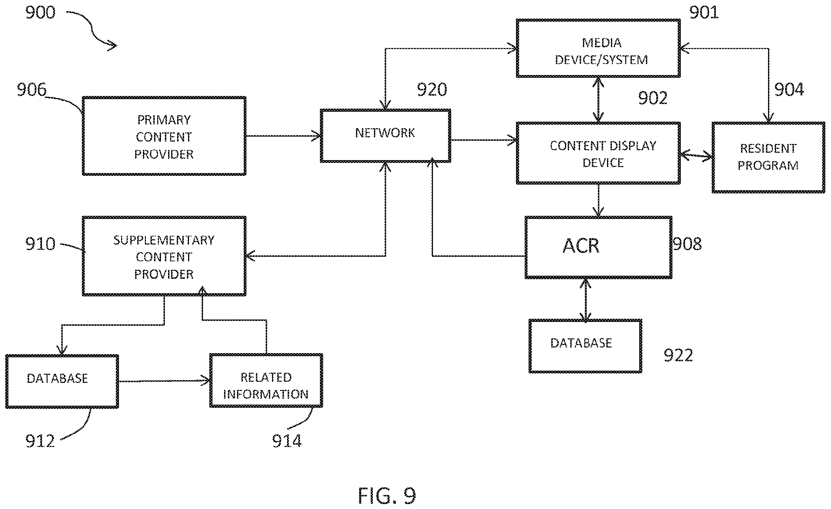

FIG. 9 represents at least one of various embodiments of a content delivery system 900 that can deliver to a media player or system primary content and separately provide supplemental content to the same media player or a different "second screen" media player that may be of interest to an audience. The system includes a media player or system 901 that is capable of receiving media content including video, audio, or multi-media content. Media player or system 901 includes, without limitation, a television set, internet protocol television (IPTV), a collection of components including a television set, a computer with display, a radio, a home theater, a sound system, a movie theater system, a hand-held device, a smart phone, any other media device to which media content is delivered to and used by a user. A content display device 902 can be configured to detect and send data from a user consuming a media product on a media device or system 101, for example a movie, television show, or listening to music from the media device or system 101, e.g.: a television, a radio, a home theater, a sound system, another computer, or even a movie in a movie theater, etc. In various embodiments the media product may be provided to the user locally, for example via DVD, CD, or any locally or physically stored media, etc., or the media can also be provided by a media content delivery service, such as a streaming media service, which can be provided by the Primary Content Provider 906 to the other media device 901 (e.g. a television or another computer) via the network 920.

Content display device can be a media player 902 that may be coupled to, or include, a device such as a processor that can execute a program 904 that monitors that which is being played on the media player. The executing program is capable of selecting temporal segments of the reproduced content.

Content display device 902 can receive primary content from one or more primary content providers 906. The primary content providers include, without limitation, television broadcast companies, cable providers, satellite programming providers, Internet-based content providers, radio stations, or any other providers of digital content. The content can be delivered by any known method. A network 920 is illustrated. The networks include cable links, such as for cable television, Internet communications, and other well-known methods of delivering digital content including cellular technologies, various wireless technologies, etc. However, the content may also be delivered or played by locally or remotely stored content sources, such as disk readers, solid state memory, DVD, CD, or any locally or physically stored media cloud computing services, or third-party storage and/or playback systems, which are not illustrated. In general, all of these sources may be capable of providing the primary content that is played by the content display device at known or unknown dates or times. That is, some of the content may be scheduled, such as television programming, while other content may be viewed at a time that is shifted from a broadcast time slot, or even that corresponds to no particular schedule at all, such as in the case of delayed playback, playback of stored content, DVD, CD, etc.

The system 900 can employ a system to allow identification of reproduced content substantially simultaneously with the reproduction regardless of the source of that content as discussed above. The executing monitoring program can take samples of the reproduced content. Samples of content as used herein means time intervals of the reproduced content and can be used to identify the media content being reproduced.

The samples may be multi-layered. Multi-layered means the sample can include audio that which is being reproduced, actors on screen, objects on screen, or other features of the reproduced video. Additionally, the sample can identify the length of time each of the individual layers will be present. For example, an audio song may be identified in the sample and it will be know that the song will be on for a known time interval. While the song is being reproduced, a particular actor may be on screen for some portion of the time interval and the background images may be varying as well.

The samples can be provided to a system for signature detection and recognition, for example an automatic content recognition component (ACR) 908 to identify the media content being displayed. As known in the art, ACR technology allows the system to look up media within a library that may match an audio or video sample taken from another piece of media. ACR converts the audio or video to an alternate format, referred to as a fingerprint, which can be saved in a signature database such as an ACR database 922, and the media item can then be identified without saving the raw data for the media item. ACR 908 can include circuitry designed to sample and hold signals corresponding to video, audio, text, or any other aspects of the content that is played by the media device. ACR 908 may include, for example, sampling circuitry that works in cooperation with the processing circuitry. ACR 908 may also comprise algorithms that are executed by processing circuitry to recognize the primary content based upon the sample extracted from the primary content stored and/or played on the media device. Although ACR fingerprints are referred to herein, signatures can include any digital sampling techniques and variants thereof that can be employed create and store information, i.e., a digital signature, to uniquely identify a digital item or digitally represented item such as a media item.

ACR 908 can be implemented in hardware, software, firmware or any combination of these to extract sufficient data from the sample to permit identification of the primary content. Any known technology for such automatic content recognition may be employed, such as recognition of an embedded watermark in the primary content, derivation of a "fingerprint" from the data defining the primary content, etc.

The output of ACR 908 may be provided to a supplementary content provider 910 through a network 920. The ACR output represents the unique identifying watermark, signature, or any other unique data that is extracted from or derived from the sample. This data can be used to identify the primary content by consultation of one or more databases 922.The identification may be used by the supplementary content provider 910 to provide the supplementary content which, based upon the identification may be adapted to the primary content.

Supplementary content provider 910 can search a signature database 912 for matching samples to the ACR sample. The matching may be partial or complete or based on one or more aspects of the ACR sample. For example, if the ACR sample is identified as including a particular song and on-screen actor, the database may be searched for matching samples that include the identified song but not the actor. A supplementary content provider can be a metadata-based content service provider as described in U.S. Patent Application No. 14/588,143 entitled Management, Categorization, Contextualizing and Sharing of Metadata-Based Content and U.S. Application Serial No. 14/587,926, entitled Identifying and Categorizing Contextual Data for Media, each of which were filed on December 31,2014 concurrently herewith by the same Applicant, OpenTV, Inc.

After one or more matching samples are found, the matching samples may be used to locate related information 914 associated with the matched sample. Many pieces of related information may be found based on the matched samples. As discussed later, particular related information is selected based on a relevancy factor. The selected related information is provided from the supplementary content provider 910 back to the content display device for display of the selected supplementary content with the primary content. In this way, the selected supplementary content is synchronized with the primary content. Systems and methods for providing synchronized supplementary content with content from a primary content provider are described in U.S. Patent Application No. 14/588,143 entitled Management, Categorization, Contextualizing and Sharing of Metadata-Based Content and U.S. Application Serial No. 14/587,926, entitled Identifying and Categorizing Contextual Data for Media, each of which were filed on December 31,2014 concurrently herewith by the same Applicant, OpenTV, Inc.

It is also contemplated that the supplementary content can be provided to multiple media player devices used by the same or different users. The supplemental content may be based on, for example, a feature associated with the device or user as well as the ACR results. For example, selection of particular supplemental content may be influenced by the media player's geographical location. That is, the distance from the library steps famous in the movie Rocky may be of interest to a media player in Philadelphia, P A, USA but not to a media player in Paris, France.

In the embodiment illustrated in FIG. 9, the supplementary content provider 910 is illustrated as separate from the primary content provider 906, and the supplementary content is illustrated as being provided separately from the primary content. Other scenarios are contemplated. For example, in some embodiments, the supplementary content may be provided by the primary content provider. That is, the supplementary content provider may be the same entity as the primary content provider or a link between the supplementary content provider and the primary content provider may be provided.

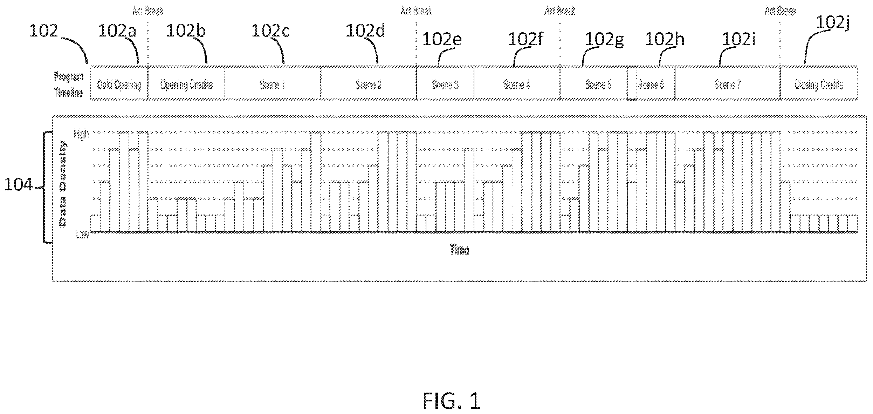

FIG. 1 illustrates a representation of a sample timeline of reproduction of media content, such as a broadcast program, and user interest. Program timeline 102 shows various parts of the program such as the opening 102a, opening credits, 102b, scene 1 to scene 7 102c to 102i, respectively, and closing credits 102j. A bar graph shows the data density 104 in each part of the timeline. Data density could be, for example, how much data is exchanged by users over social media, crowd-sourced data available for a scene or portion of the media content or other such metrics. For example, data density increases towards the end of the opening 102a and is at a high level by the end of the opening. Similarly, scene 7 is characterized by a high data density. In contrast, the data density associated with the opening credits 102b is comparatively low.

Accordingly, in a system that delivers this synchronized data there can be long portions of the media's timeline where data is sparse or non-existent, such as during the opening credits 102a and closing credits 102j. This will be especially true in a system that relies on crowd-sourced data, where contributors will inevitably concentrate on the most popular moments and leave other moments unaddressed.

Radio broadcasters have long recognized that extended periods of audio silence are generally considered a poor audience experience. Extended periods of data-silence - herein referred to as "lulls" or "data lulls"- in media content may also prove to be a bad practice for synchronized data broadcasters. Therefore, as radio broadcasters attempt to eliminate moments of audio silence; synchronized data broadcasters can take similar steps to eliminate data lulls.

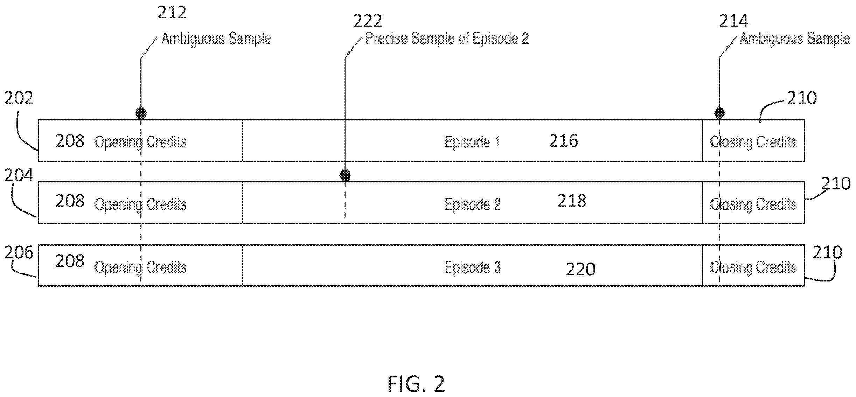

FIG. 2 illustrates the situation wherein in any particular media sample it is possible that the ACR algorithm returns an ambiguous identification results if the identifying sample exists in multiple media titles. FIG. 2 illustrates three episodes of the same television series 202, 204, 206 each episode having a different storyline 216, 218, 220. An ACR sample 222 taken during reproduction of the storyline of the episode will uniquely identify episode 204 because each storyline 216, 218, 220 is different from one another. However, episodes 202, 204, 206 can share common scenes. For example, all of the episodes can share the same opening credits 208 and closing credits 210 across all the various episodes. As such, an ACR sample 212 taken during the opening credits 208 or an ACR sample 214 taken during the closing credits will be ambiguous as to which episode 202, 204, 206 is identified. Similarly, different edits of the same movie could share a variety of scenes.

Each media title can have its own set of metadata and that data are specific enough that it only belongs to that one piece of media. Therefore, it is difficult to know what metadata or supplemental data to display when an ACR result lists multiple matches. That is, in the example of FIG. 2 a sample 212, 214 that returns an ambiguous identification as to which episode is being broadcast can cause uncertainty as to which supplemental data is synchronized - or relevant - to the particular episode.

Determining which synchronized data to provide and for what length of time to provide that data can be determined from modelling the relations between media instances within the abstract data type known as a graph and traversing the graph using a defined set of rules designed to maintain a high level of relevance. In the lull management - the management of synchronized data for a period of time - the desired outcome would be data valid to the entire time line of the media but not manually entered into the system.

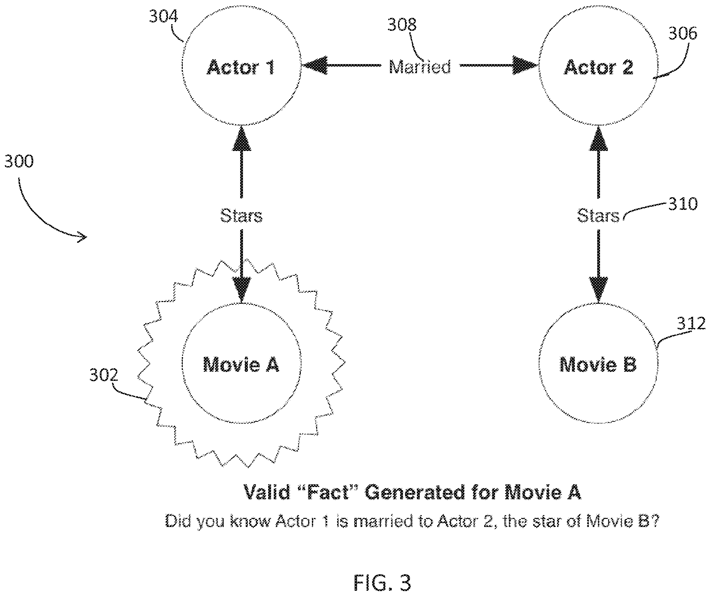

FIG. 3 illustrates a graph 300 having a defined set of rules for determining a relevant fact for a reproduction of a movie. For example, the statement "Actor 1 is married to Actor 2, the star of Movie B" can be derived for "Movie A" 302 from a graph using relationships not directly associated with "Movie A". The focal point for this generated data can be non-temporal data associated with "Movie A" 302. In the case where we are missing a certain type of temporal data but have access to another, the temporal data can act as the focal element. For example, in "Movie A" 302, the system could trigger the generated synchronized data based on the context of video being reproduced. As illustrated, a sample may indicate "Actor 1" 304 is displayed in a particular scene of "Movie A". The sample can then be used to identify a relationship 308 -in this case being married - of "Actor 1" 304 to "Actor 2" 306 and, further, that "Actor 2" has a relationship 310 -is the star- in "Movie B" 312. That is, a fact relevant to "Movie A" 302 is based on a set of rules rather than a temporal relationship, although the fact can be delivered based on a temporal focal point, for example Actor 1's appearance in Movie A .

When the ACR sample returns an ambiguous media title identification, the desired outcome is to deliver true statements based on relationships among the identified media titles; for example, displaying the title of the TV series if all titles are episodes of that series.

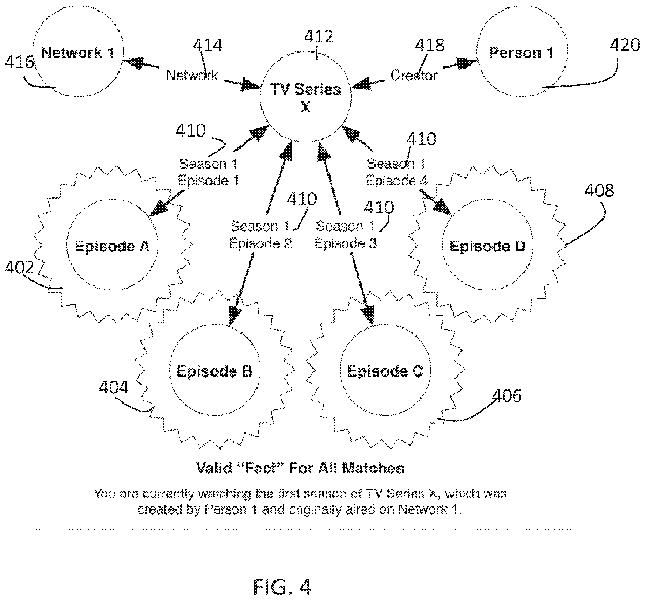

FIG. 4 illustrates an example of a graph for determining a true statement for a ACR sample having an ambiguous media identification. To achieve these features the media data and the relations between the data in a graph are stored. When modeling the data for the graph, the nodes of the graph would store the data itself and the edges would store the relationships between the various data points. The example of FIG. 4, illustrates four episodes 402, 404, 406, 408 of a television series. Because the opening credits of each episode may be the same, an ACR sample taken during the opening credits, as discussed above, may be ambiguous to distinguish between the particular episodes being reproduced. That is, the ACR sample matches all episodes 402-408 for identification. However, each sample can have a common relationship. In the illustrated example, the ACR sample taken during the opening credits of each episode 402-408 have a common relationship 410. In this case, the ACR sample of the opening credits are all associated with season 1 of a common TV series 412. Having identified a common feature, or focal node, of the ambiguous ACR sample as TV series 412, a relationship 414, 414 between the common feature and relevant supplemental data 416, 420 can be identified. As illustrated, once the common TV series is identified, relationship 414 may be the network on which the series was broadcast and identified as network 416. Similarly, relationship 418 could be the creator of the TV series and identified as person named 420. Accordingly, a relevant fact displayed during the opening credits of any episode 402-408 could be "You are watching the first season of TV series X, which was created by Person 1 and originally aired on Network 1."

In some embodiments nodes or edges or both could carry weight values used by the rules to ensure the graph is not traversed to the point of irrelevance. Although these rules can vary significantly depending on the kind of data types of relationships stored for this data, there are a few basic principles upon which the specific rules can be based
1. Relevant relationships should include the focal data node or, in the case of multiple focal nodes, a combined focal node (i.e., a node related to all focal nodes by one degree.).
   This will maintain the connection to the source of the data. Referring again to FIG. 3, the statement "Actor 1 is married to Actor 2, the star of Movie B" is relevant to Movie A because Actor 1 has a direct relationship with Movie A. The statement "Actor 2 stars in Movie B" may be true but is irrelevant in the context of Movie A.
2. The distance between the focal node and the final node should be governed by the rules.

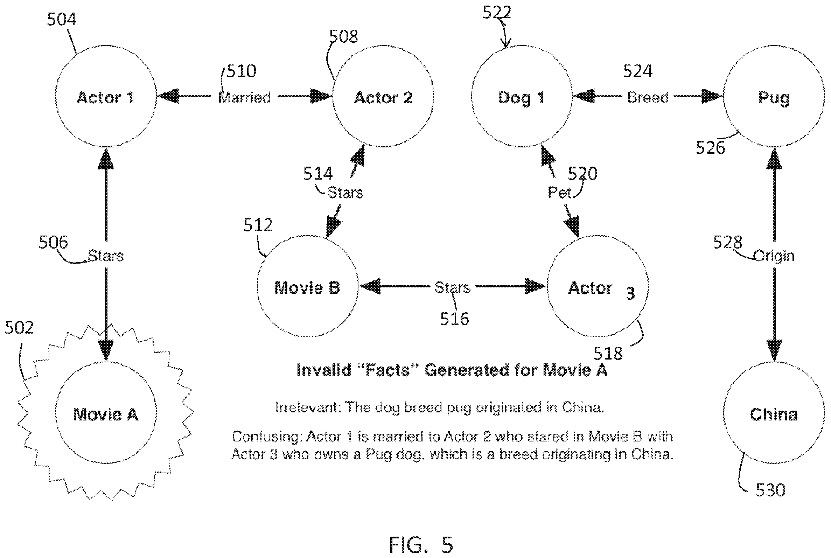

FIG. 5 illustrates a graph in which facts concerning "Movie A" 502 can be determined but the determined facts may be confusing to a viewer or too loosely connected to "Movie A" to be relevant or interesting to a viewer. In the illustrated example, similar to FIG. 3, "Actor 1" 504 is related directly to "Movie A" by the relationship of starring 506 therein and "Actor 1" has the relationship 510 of marriage to "Actor 2" 508, who stars 514 in "Movie B" 512. As in FIG. 3 a relevant fact could be "Actor 1 is married to Actor 2, the star of Movie B." However, the graphical relationship could continue for "Movie B", which has a relationship 516 of starring "Actor 3" 518. Actor 3 has the relationship 520 of pet owner to a dog 522. Dog 522 is related 524 by breed to the dog breed Pug 526 and Pug dogs are related 528 by their origin 528 to China 530. Accordingly, a fact could be presented in Movie A while Actor 1 is on the screen that, "The dog breed Pug originated in China", which would seem irrelevant to Movie A. Alternatively, the fact could be, "Actor 1 is married to Actor 2 who starred in Movie B with Actor 3 who owns a Pug dog, which is a breed originating in China", which is likely to be confusing to a viewer of Movie A.

Accordingly, different types of data and relationships may allow for more or less distance from the focal node. However, the rules should be designed to limit this distance based on what is appropriate for the specific data. Without this, confusing but true data can be generated. The statement "Actor 1 is married to Actor 2 who stared in Movie B with Actor 3 who owns a Pug dog, which is a breed originating in China" may be true. But it is confusing and loses relevance to Movie A.

### Example 1

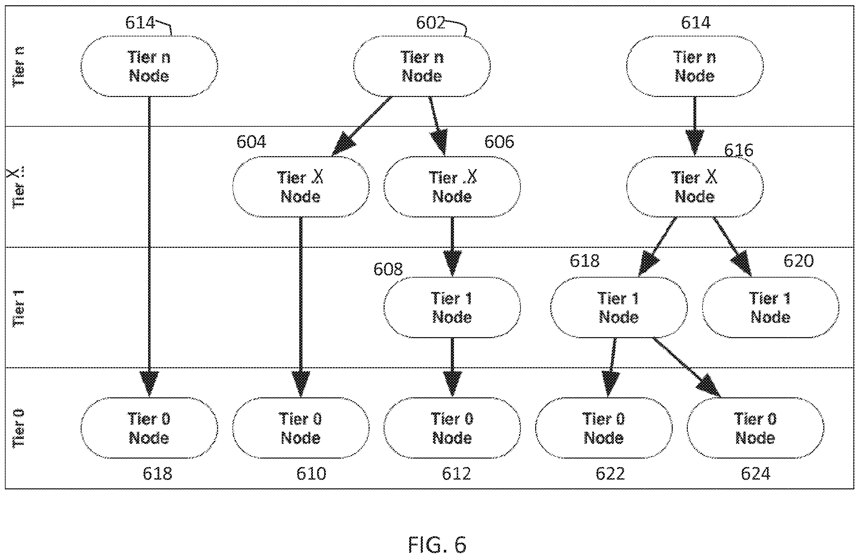

FIG. 6 illustrates an example in which a hierarchical ranking system is imposed on the data by classifying the data nodes into tiered types tier 0 ... tier n. This is similar to imposing a tree structure onto the data graph with different node types having a different ranking in the hierarchy. A rule could be defined where the data stored in a specific tier or rank is true for all relatives of lesser ranks. In FIG. 6, tier 0 are facts and the tiers represent higher level facts. For example, tier 0 could be different edits of the same media ("theatrical release," "director's cut," "extended cut"); tier 1 could be different media titles ("Blade Runner," "Lord of the Rings, the Fellowship of the Rings," "Lord of the Rings, the Two Towers"); tier x can be different series of media ("The Simpsons," "The Lord of the Rings Trilogy," "The Hobbit Trilogy"); and tier n can be different related series ("Matt Groening shows," "Middle Earth media"). That is, nodes in tier 1 are true for all related nodes in tier 0. Referring to FIG. 6, tier n node 614 is only true for tier 0 node 615. Tier 1 node 608 is true for tier 0 node 612. Tier x node 606 is true for tier 1 node 608 and, in sequence, tier 0 node 612. Tier x node 604 is true for tier 0 node 610. Tier n node 602 is true for tier x node 604, tier x node 606, tier 1 node 608, tier 0 node 610, and tier 0 node 612. Similarly, tier 1 node 618 is true for tier 0 node 622 and 624 while tier 1 node 620 is related to no tier 0 nodes. Tier x node 616 is true for tier 1 nodes 618, 620 and tier 0 node 622, 624. Similarly, tier n node 614 is true for all tier x node 616, tier 1 nodes 618, 620, and tier 0 nodes 622, 624.

Ambiguous states can now be dealt with by knowing that shared relatives of greater rank hold information true to all lesser ranks. Therefore a set of lesser nodes could truthfully display information of a commonly shared node of a greater rank. Because the lower the rank, the more specific the information, the best results would come from a rule that states a focal set of nodes should display information of the least ranking, commonly shared node of a greater rank than the focal set.

Traversing to the next highest-ranking direct relative and mining its data could achieve lull management on any node. When all the data is exhausted in the current node the system could then travel to the next highest and the next highest until it exhausts the root node(s) and is truly out of data. By imposing a traversal rule that the graph walker only follows edges to nodes higher in the hierarchy, the process is guaranteed to stop at some point.

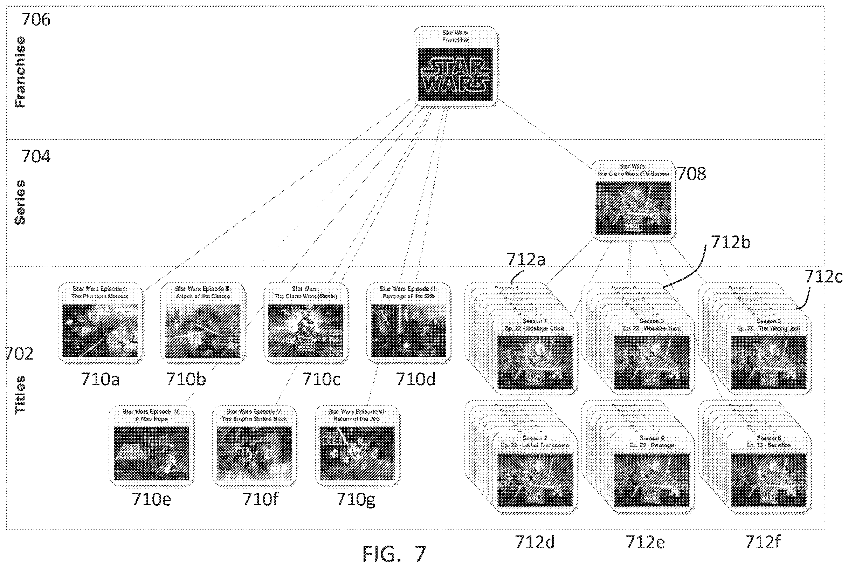

FIG. 7 illustrates a specific example of the first example when delivering synchronized data along with one of the many titles in the Star Wars franchise. One could organize the data in a 3-tiered system with the Star Wars franchise being the top tier 706 or root node, information about the various television series 708 filling the middle tier nodes, and the individual movies 710a-710g and episodes in each season of the television series 712a-712 f filing the bottom tier or leaf nodes.

In the example of FIG. 7 it is assumed there is an ambiguous ACR sample such as in the opening credits of the episodes 712a-712f of the seasons of the Clone Wars television show 708. In order to provide supplemental data for the duration of the ambiguous ACR sample, the system could traverse the graph up from the multiple matching episode nodes 712a-712fin tier 702 to the higher ranking tier 704 including the Clone Wars series node 708 (i.e. the least ranking, common, direct relative of all the episodes identified through the ACR sample) and provide supplemental information related to the Clone Wars series node 708. For example, a fact associated with all the episodes could be Art Director. When information about tier 704 Clone War series 708 is exhausted, then the system could move to the Star Wars franchise tier 706 and mine data generally related to all Star Wars spin-offs. For example, a fact true for all in the Star Wars franchise might be that George Lucas sold the rights to Star Wars to the Walt Disney Company on October 30, 2012. The same path can be used for lull management of a single episode to fill gaps in that episode where no synchronized data at the episode tier 702 is known.

### Example 2

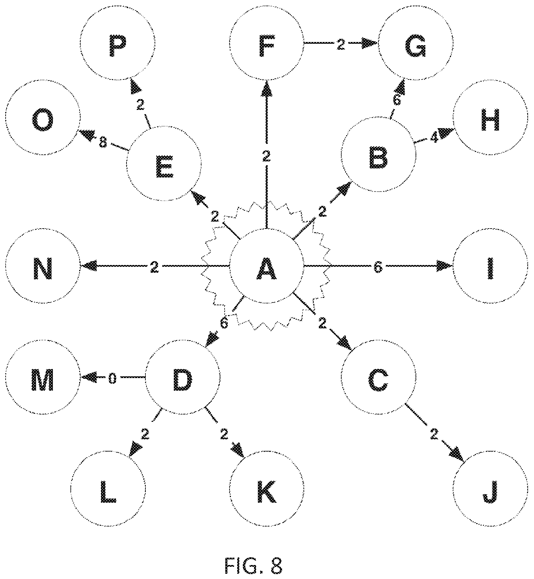

FIG. 8 illustrates another example where the graph is a digraph with a traversal cost on each edge (where the cost from a location A to another location B may be different from the cost from location B to location A). That is, a cost is associated with the relationship between nodes. The system employs a dynamic maximum traversal cost. "Cost" is not necessarily a fiscal amount but rather representative of a distance between nodes and may be an indicator of the relevance of the relationship of one node to another. A higher cost between two nodes indicating nodes that are more remote from one another than nodes having a lesser cost. Thus, a first node having a higher cost relative to a second node than a third node is more relevant to the second node than the third node.

Referring back to FIG. 7, but assuming traversal costs on the edges, one could start with the installment, and then search out following edges accumulating the total traversal cost from the installment. The system does not follow any edge that would increase the total cost beyond the current maximum. Thus the system can accumulate all of the nodes that are within the maximum cost from the installment and use those to populate the lull period. The cost differentials are so that it can be cheaper to go from a movie to the actors in the movie than going from those actors to other movies they are in. If this process does not yield enough to fill the duration of the lull, then the process is repeated with an increased maximum traversal cost until enough information is collected to fill the lull period.

For example, in FIG. 8 a maximum traversal cost could be 5. As such, given the relationship costs shown, nodes B, C, E, F, G, N, J, and Pare accessible from node A. Note that node G is accessible from node A through node F but node G is not directly accessible from node A. Accordingly, a lull period in node A may be filled with facts related by nodes B, C, E, F, G, N, J, and P. Should these facts be insufficient to fill the lull period, the cost could be raised to 6, which would include additional nodes that are more remote and less relevant to node A.

### Example 3

In another example the graph is a digraph with an activation strength on each edge (where the strength from A to B may be different from the strength from B to A), and the example will track activation level per node. Each time a node is added to the collection of items to fill the lull period, all other nodes adjacent to the newly added node in the graph have the activation strength of the edge connecting them added to their activation level. Any node whose activation level is greater than an activation threshold also gets added to the collection and the process is repeated until no more activations occur.

As an example, the fact that an actor appeared in a different movie may not be initially relevant to a presently reproduced movie; but if several actors in this film appeared together in another movie, then that may be useful information to fill the lull period. Having multiple actors in the same film get activated would add the strengths of each edge and raise the activation level of that movie enough to get added. If this process does not yield enough to fill the lull period, then the activation threshold is reduced to pull in more items.

Another algorithmic variation on the above example is that if a node gets "over activated" (the total activation level exceeds the threshold), the strength of the edges leading out of those node are increased proportionally (so if the threshold was 1.00 and the node was activated to a level of 1.2, then each adjacent node would have its activation level increased by 1.2 times the edge strength). Given this, the node for the current matches would be over-activated (perhaps inversely proportionally to the number of matches) which would tend to provide additional chances for activation for items close to the movie or original node.

### Illustrative Operating Environment

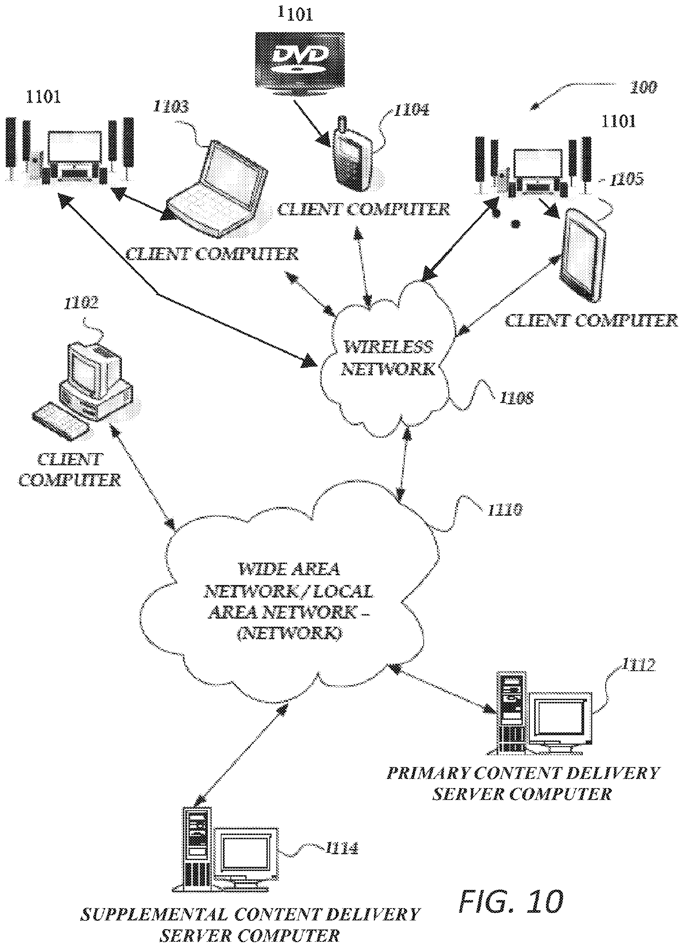

FIG. 10 shows components of one embodiment of an environment in which embodiments content delivery system 900 described herein may be practiced. Not all of the components may be required to practice the innovations, and variations in the arrangement and type of the components may be made without departing from the spirit or scope of the innovations. As shown, system 100 of FIG. 10 includes local area networks (LANs) wide area networks (WANs) -(network) 1110, wireless network 1108, client computers 1102-1105, Primary Content Delivery Server Computer 1112, and Supplementary Content Delivery Server Computer 114.

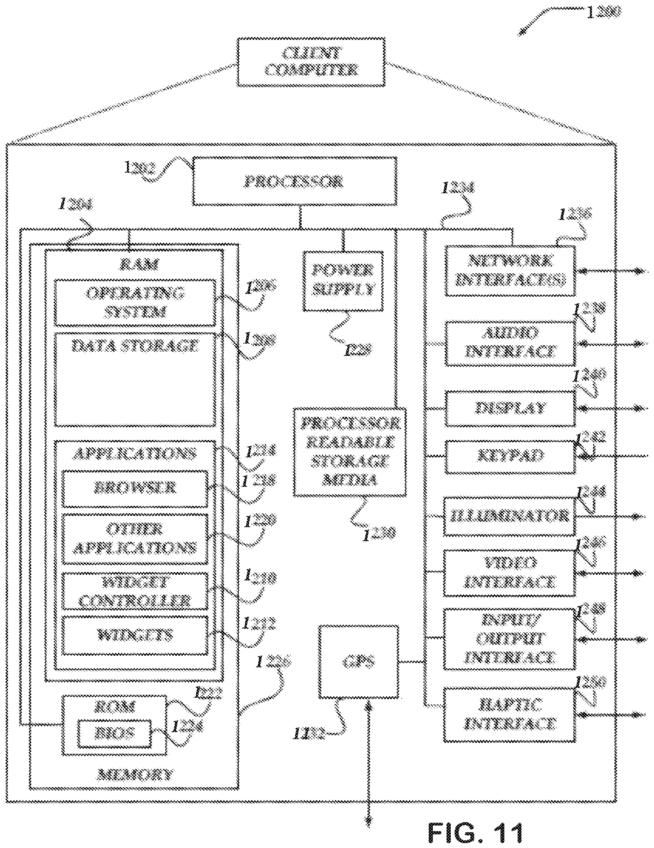

In one embodiment, at least some of client computers 1102-1105 may operate over a wired and/or wireless network, such as networks 1110 and/or 1108. Generally, client computers 1102-1105 may include virtually any computer capable of communicating over a network to send and receive information, perform various online activities, offline actions, or the like. In various embodiments, one or more of client computers 1102-1105 can be configured to operate with conjunction with a media content display device or system 1101, for example a television, radio, another computer, a tablet device, as smart phone, or any device enabled to allow a user to consume media. For example, a client device 1105 can be configured to send data from a user consuming a media product on a media device or system 1101, for example a movie, television show, or listening to music from or another source or media device or system 1101, e.g.: a television, a radio, a home theater, a sound system, another computer, or even in a movie theater, etc. In various embodiments the media product may be provided to the user locally, for example via DVD, CD, or any locally or physically stored media, etc. and can also be provided by a media content delivery service, such as a streaming media service, which can be provided by the Primary Content Delivery Server 1112 to the other media device 1101 (e.g. a television or another computer). Client computers 1102-1105 need not of course be constrained to such use and may also be employed, for example, as an end-user computing node, or any other typical use for a computer device. At least one embodiment of content display devices 901 (see FIG. 9) is described with respect to client computers 1102-1105 as described in more detail below in conjunction with FIG 11.

Computers that may operate as client computer 1102 may include computers that typically connect using a wired or wireless communications medium such as personal computers, multiprocessor systems, microprocessor-based or programmable electronic devices, network PCs, or the like. In some embodiments, client computers 1102-1105 may include virtually any portable personal computer capable of connecting to another computing device and receiving information such as, laptop computer 1103, smart mobile telephone 1104, and tablet computers 1105, and the like. However, portable computers are not so limited and may also include other portable devices such as cellular telephones, radio frequency (RF) devices, infrared (IR) devices, Personal Digital Assistants (PDAs), handheld computers, wearable computers, integrated devices combining one or more of the preceding devices, and the like. As such, client computers 1102- 1105 typically range widely in terms of capabilities and features. Moreover, client computers 1102-1105 may access various computing applications, including a browser, or other web-based application.

A web-enabled client computer may include a browser application that is configured to receive and to send web pages, web-based messages, and the like. The browser application may be configured to receive and display graphics, text, multimedia, and the like, employing virtually any web-based language and the like. In one embodiment, a user of the client computer may employ the browser application to perform various activities over a network (online). However, another application may also be used to perform various online activities.

Client computers 1102-1105 may also include at least one other client application that is configured to receive and/or send content between another computer. The client application may include a capability to send and/or receive content, or the like. The client application may further provide information that identifies itself, including a type, capability, name, and the like. In one embodiment, client computers 1102-1105 may uniquely identify themselves through any of a variety of mechanisms, including an Internet Protocol (IP) address, a phone number, Mobile Identification Number (MIN), an electronic serial number (ESN), or other device identifier. Such information may be provided in a network packet, or the like, sent between other client computers, Primary Content Delivery Server Computer 1112, Supplementary Content Delivery Server Computer 1114, or other computers.

Client computers 1102-1105 may further be configured to include a client application that enables an end-user to log into an end-user account that may be managed by another computer, such as Supplementary Content Delivery Server Computer 1114, Primary Content Delivery Server Computer 1112, or the like. Such end-user account, in one non-limiting example, may be configured to enable the end-user to manage one or more online activities, including in one non-limiting example, search activities, social networking activities, browse various websites, communicate with other users, or the like. However, participation in such online activities may also be performed without logging into the end-user account.

Wireless network 1108 is configured to couple client computers 1103-1105 and its components with network 1110. Wireless network 1108 may include any of a variety of wireless sub-networks that may further overlay stand-alone ad-hoc networks, and the like, to provide an infrastructure-oriented connection for client computers 1103-1105. Such sub-networks may include mesh networks, Wireless LAN (WLAN) networks, cellular networks, and the like. In one embodiment, the system may include more than one wireless network.

Wireless network 1108 may further include an autonomous system of terminals, gateways, routers, and the like connected by wireless radio links, and the like. These connectors may be configured to move freely and randomly and organize themselves arbitrarily, such that the topology of wireless network 1108 may change rapidly.

Wireless network 1108 may further employ a plurality of access technologies including 2nd (2G), 3rd (3G), 4th (4G) 5th (5G) generation radio access for cellular systems, WLAN, Wireless Router (WR) mesh, and the like. Access technologies such as 2G, 3G, 4G, *SG,* and future access networks may enable wide area coverage for mobile devices, such as client computers 1103-1105 with various degrees of mobility. In one non-limiting example, wireless network 1108 may enable a radio connection through a radio network access such as Global System for Mobile communication (GSM), General Packet Radio Services (GPRS), Enhanced Data GSM Environment (EDGE), code division multiple access (CDMA), time division multiple access (TDMA), Wideband Code Division Multiple Access (WCDMA), High Speed Downlink Packet Access (HSDP A), Long Term Evolution (L TE), and the like. In essence, wireless network 1108 may include virtually any wireless communication mechanism by which information may travel between client computers 1103-1105 and another computer, network, and the like.

Network 1110 is configured to couple network computers with other computers and/or computing devices, including, Primary Content Delivery Server Computer 1112, Metadata-Based Delivery Server Computer 114, client computer 1102, and client computers 1103-1105 through wireless network 1108. Network 1110 is enabled to employ any form of computer readable media for communicating information from one electronic device to another. Also, network 1110 can include the Internet in addition to local area networks (LANs), wide area networks (WANs), direct connections, such as through a universal serial bus (USB) port, other forms of computer-readable media, or any combination thereof. On an interconnected set of LANs, including those based on differing architectures and protocols, a router acts as a link between LANs, enabling messages to be sent from one to another. In addition, communication links within LANs typically include twisted wire pair or coaxial cable, while communication links between networks may utilize analog telephone lines, full or fractional dedicated digital lines including T1, T2, T3, and T4, and/or other carrier mechanisms including, for example, Ecarriers, Integrated Services Digital Networks (ISDNs), Digital Subscriber Lines (DSLs), wireless links including satellite links, or other communications links known to those skilled in the art. Moreover, communication links may further employ any of a variety of digital signaling technologies, including without limit, for example, DS-0, DS-1, DS-2, DS-3, DS-4, OC-3, OC- 12, OC-48, or the like. Furthermore, remote computers and other related electronic devices could be remotely connected to either LANs or WANs via a modem and temporary telephone link. In one embodiment, network Ill 0 may be configured to transport information of an Internet Protocol (IP). In essence, network Ill 0 includes any communication method by which information may travel between computing devices.

Additionally, communication media typically embodies computer readable instructions, data structures, program modules, or other transport mechanism and includes any information delivery media. By way of example, communication media includes wired media such as twisted pair, coaxial cable, fiber optics, wave guides, and other wired media and wireless media such as acoustic, RF, infrared, and other wireless media.

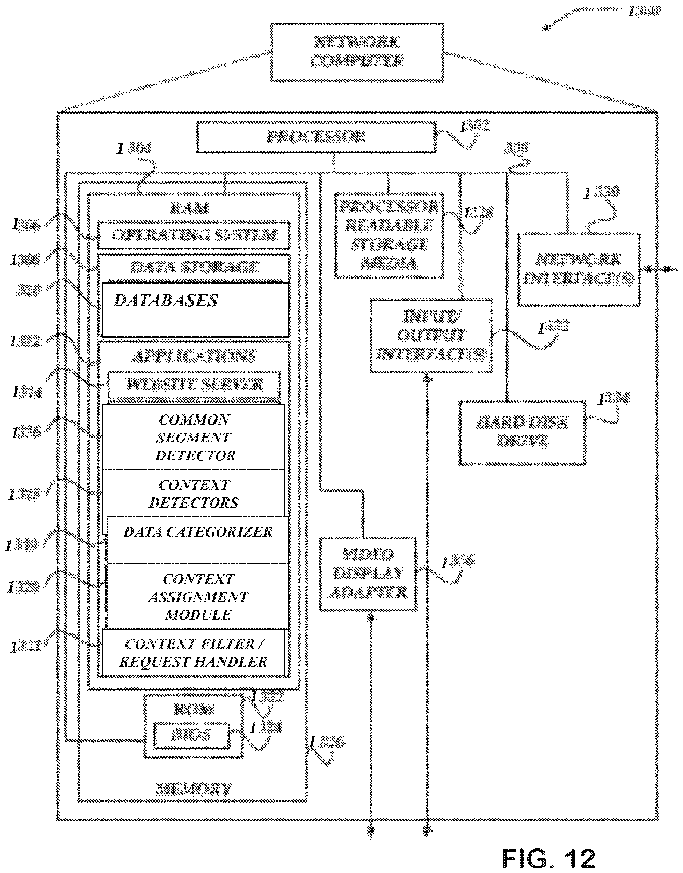

One embodiment of a Supplementary Content Delivery Server Computer 1114 is described in more detail below in conjunction with FIG. 12. Briefly, however, Supplementary Content Delivery Server Computer 1114 includes virtually any network computer capable of delivering metadata-based content or supplemental content to a client user and accepting requests and data therefrom. For example, a client device 1105 can be configured to send data from a user consuming a media product, for example a movie, television show, or listening to music from or another source or media device, e.g.: a television, a radio, a, movie theater, etc. The Supplementary Content Delivery Server Computer 1114 can then deliver, inter alia, complementary synchronous metadata-based content or supplemental content based on the identification of the media being consumed by the user. Computers that may be arranged to operate as Supplementary Content Delivery Server Computer 1114 include various network computers, including, but not limited to multiprocessor systems, server computers, and the like.

Although FIG. 12 illustrates Supplemental Content Delivery Server Computer 1114 as a single computer, the invention is not so limited. For example, one or more functions of the Metadata Delivery Server Computer 1114 may be distributed across one or more distinct network computers. Moreover, Supplemental Content Delivery Server Computer 1114 is not limited to a particular configuration. Thus, in one embodiment, Supplemental Content Delivery Server Computer 1114 may contain a plurality of network computers. In another embodiment, Supplemental Content Delivery Server Computer 1114 may contain a plurality of network computers that operate using a master/slave approach, where one of the plurality of network computers of Supplemental Content Delivery Server Computer 1114 is operative to manage and/or otherwise coordinate operations of the other network computers. In other embodiments, the Supplemental Content Delivery Server Computer 1114 may operate as a plurality of network computers arranged in a cluster architecture, a peer-to-peer architecture, and/or even within a cloud architecture. Thus, embodiments are not to be construed as being limited to a single environment, and other configurations, and architectures are also envisaged.

Although illustrated separately, Primary Content Delivery Server Computer 1112 and Supplemental Content Delivery Server Computer 1114 may be employed as a single network computer, separate network computers, a cluster of network computers, or the like. In some embodiments, either Primary Content Delivery Server Computer 1112 or Supplemental Content Delivery Server Computer 1114, or both, may be enabled to deliver content, respond to user interactions with the content, track user interaction with the content, update widgets and widgets controllers, or the like.

### Illustrative Content Display Device/Media Player/Client Computer

FIG. 11 shows one embodiment of a content display device as Client Computer 1200 that may be included in a system implementing embodiments of the invention. Client Computer 1200 may include many more or less components than those shown in FIG. 12. However, the components shown are sufficient to disclose an illustrative embodiment for practicing the present invention. Client Computer 1200 may represent, for example, one embodiment of at least one of Client Computers 1102-1105 of FIG. 10.

As shown in the figure, Client Computer 1200 includes a processor 1202 in communication with a mass memory 1226 via a bus 1234. In some embodiments, processor 1202 may include one or more central processing units (CPU). Client Computer 1200 also includes a power supply 1228, one or more network interfaces 1236, an audio interface 1238, a display 240, a keypad 242, an illuminator 244, a video interface 246, an input/output interface 248, a haptic interface 1250, and a global positioning system (GPS) receiver 1232 or other geolocation components.

Power supply 1228 provides power to Client Computer 1200. A rechargeable or non-rechargeable battery may be used to provide power. The power may also be provided by an external power source, such as an alternating current (AC) adapter or a powered docking cradle that supplements and/or recharges a battery.

Client Computer 1200 may optionally communicate with a base station (not shown), or directly with another computer. Network interface 1236 includes circuitry for coupling Client Computer 1200 to one or more networks, and is constructed for use with one or more communication protocols and technologies including, but not limited to, GSM, CDMA, TDMA, GPRS, EDGE, WCDMA, HSDP A, LTE, user datagram protocol (UDP), transmission control protocol/Internet protocol (TCP/IP), short message service (SMS), WAP, ultra-wide band (UWB), IEEE 802.16 Worldwide Interoperability for Microwave Access (WiMax), session initiated protocol/real-time transport protocol (SIP/RTP), or any of a variety of other wireless communication protocols. Network interface 1236 is sometimes known as a transceiver, transceiving device, or network interface card (NIC).

Audio interface 1238 is arranged to produce and receive audio signals such as the sound of media from another source (e.g., television, radio, etc.). For example, audio interface 1238 may be coupled to a speaker and microphone (not shown) to enable telecommunication with others and/or generate an audio acknowledgement for some action.

Display 1240 may be a liquid crystal display (LCD), gas plasma, light emitting diode (LED), organic LED, or any other type of display used with a computer. Display 1240 may also include a touch sensitive screen arranged to receive input from an object such as a stylus or a digit from a human hand.

Keypad 1242 may comprise any input device arranged to receive input from a user. For example, keypad 1242 may include a push button numeric dial, or a keyboard. Keypad 1242 may also include command buttons that are associated with selecting and sending images. Illuminator 1244 may provide a status indication and/or provide light. Illuminator 1244 may remain active for specific periods of time or in response to events. For example, when illuminator 1244 is active, it may backlight the buttons on keypad 1242 and stay on while the Client Computer is powered. Also, illuminator 1244 may backlight these buttons in various patterns when particular actions are performed, such as dialing another client computer. Illuminator 1244 may also cause light sources positioned within a transparent or translucent case of the client computer to illuminate in response to actions.

Video interface 1246 is arranged to capture video images, such as a still photo, a video segment, an infrared video, or the like. For example, video interface 1246 may be coupled to a digital video camera, a web-camera, or the like. Video interface 1246 may comprise a lens, an image sensor, and other electronics. Image sensors may include a complementary metal-oxide-semiconductor (CMOS) integrated circuit, charge-coupled device (CCD), or any other integrated circuit for sensing light.

Client computer 1200 also comprises input/output interface 1248 for communicating with external devices, such as a headset, or other input or output devices not shown in FIGURE 2. Input/output interface 1248 can utilize one or more communication technologies, such as USB, infrared, Bluetooth™, or the like.

Haptic interface 1250 is arranged to provide tactile feedback to a user of the client computer. For example, the haptic interface 1250 may be employed to vibrate client computer 1200 in a particular way when another user of a computing computer is calling. Accelerometers and other kinetic or force based interfaces can be included as well.

Client computer 1200 may also include GPS transceiver 1232 to determine the physical coordinates of client computer 1200 on the surface of the Earth. GPS transceiver 1232, in some embodiments, may be optional. GPS transceiver 1232 typically outputs a location as latitude and longitude values. However, GPS transceiver 1232 can also employ other geo-positioning mechanisms, including, but not limited to, triangulation, assisted GPS (AGPS), Enhanced Observed Time Difference (E-OTD), Cell Identifier (CI), Service Area Identifier (SAl), Enhanced Timing Advance (ETA), Base Station Subsystem (BSS), or the like, to further determine the physical location of client computer 1200 on the surface of the Earth. It is understood that under different conditions, GPS transceiver 1232 can determine a physical location within millimeters for client computer 1200; and in other cases, the determined physical location may be less precise, such as within a meter or significantly greater distances. In one embodiment, however, client computer 1200 may through other components, provide other information that may be employed to determine a physical location of the computer, including for example, a Media Access Control (MAC) address, IP address, or the like.

Mass memory 1226 includes a Random Access Memory (RAM) 1204, a Read-only Memory (ROM) 1222, and other storage means. Mass memory 1226 illustrates an example of computer readable storage media (devices) for storage of information such as computer readable instructions, data structures, program modules or other data. Mass memory 1226 stores a basic input/output system (BIOS) 1224 for controlling low-level operation of client computer 1200. The mass memory also stores an operating system 206 for controlling the operation of client computer 1200. It will be appreciated that this component may include a general-purpose operating system such as a version of UNIX, or LINUX™, or a specialized client communication operating system such as Microsoft Corporation's Windows Mobile™, Apple Corporation's iOS™, Google Corporation's Android™ or the Symbian® operating system. The operating system may include, or interface with a Java virtual machine module that enables control of hardware components and/or operating system operations via Java application programs.

Mass memory 1226 further includes one or more data storage 1208, which can be utilized by client computer 1200 to store, among other things, applications 1214 and/or other data. For example, data storage 1208 may also be employed to store information that describes various capabilities of client computer 1200. The information may then be provided to another computer based on any of a variety of events, including being sent as part of a header during a communication, sent upon request, or the like. Data storage 1208 may also be employed to store social networking information including address books, buddy lists, aliases, user profile information, or the like. Further, data storage 1208 may also store message, web page content, or any of a variety of user generated content. At least a portion of the information may also be stored on another component of client computer 1200, including, but not limited to processor readable storage media 1230, a disk drive or other computer readable storage devices (not shown) within client computer 1200.

Processor readable storage media 1230 may include volatile, nonvolatile, removable, and non-removable media implemented in any method or technology for storage of information, such as computer- or processor-readable instructions, data structures, program modules, or other data. Examples of computer readable storage media include RAM, ROM, Electrically Erasable Programmable Read-only Memory (EEPROM), flash memory or other memory technology, Compact Disc Read-only Memory (CD-ROM), digital versatile disks (DVD) or other optical storage, magnetic cassettes, magnetic tape, magnetic disk storage or other magnetic storage devices, or any other physical medium which can be used to store the desired information and which can be accessed by a computer. Processor readable storage media 1230 may also be referred to herein as computer readable storage media and/or computer readable storage device. Applications 1214 may include computer executable instructions which, when executed by client computer 1200, transmit, receive, and/or otherwise process network data. Network data may include, but is not limited to, messages (e.g. SMS, Multimedia Message Service (MMS), instant message (IM), email, and/or other messages), audio, video, and enable telecommunication with another user of another client computer.

Applications 214 may include, for example, browser 1218, and other applications 1220. Other applications 1220 may include, but are not limited to, calendars, search programs, email clients, IM applications, SMS applications, voice over Internet Protocol (VOIP) applications, contact managers, task managers, transcoders, database programs, word processing programs, security applications, spreadsheet programs, games, search programs, and so forth.

Browser 1218 may include virtually any application configured to receive and display graphics, text, multimedia, messages, and the like, employing virtually any web based language. In one embodiment, the browser application is enabled to employ HDML, WML, WMLScript, JavaScript, HTML, XML, and the like, to display and send a message. However, any of a variety of other web-based programming languages may be employed. In one embodiment, browser 1218 may enable a user of client computer 1200 to communicate with another network computer, such as Supplementary Content Delivery Server Computer 114 of FIG. 12.

Applications 1214 may also include Widget Controller 1210 and one or more Widgets 1212. Widgets 1212 may be collections of content provided to the client computer by Metadata Delivery Server Computer 112. Widget Controller 1210 may be a program that may be provided to the client computer by Primary Content Delivery Server Computer 1112. Widget Controller 1210 and Widgets 1212 may run as native client computer applications or they may run in Browser 1218 as web browser based applications. Also, Widget Controller 1210 and Widgets 1212 may be arranged to run as native applications or web browser applications, or combination thereof.

As used herein, the term "widget controller" refers to a computer program that may be operative on a client application. Widget controllers may be downloaded and/or otherwise deployed to a client application. Widget controllers may be arranged to be operative for downloading content, monitoring media, or otherwise managing widgets located within client applications. As used herein, the term "widget" refers to a user-interface element located in the client application. Widgets may be invisible or visible to users of the client applications. In some cases, a widget controller may generate widget "on-the-fly" before deploying content into the widget. Widgets may be adapted to reflect the operating environment of the client application that they are being hosted within. For example, in clients that support HTML, CSS a widget may be an HTML element such as a DIV, P, or the like. For client application operative in a Java environment, a widget may be a View object or Window object, and so on.

### Illustrative Network Computer

FIG.12 shows one embodiment of a network computer 1300, according to one embodiment of the invention. Network computer 1300 may include many more or less components than those shown. The components shown, however, are sufficient to disclose an illustrative embodiment for practicing the invention. Network computer 1300 may be configured to operate as a server, client, peer, a host, or any other computer. Network computer 1300 may represent, for example Primary Content Delivery Server Computer 1112 and/or Supplementary Content Delivery Server Computer 1114 of FIG. 11, and/or other network computers.

Network computer 1300 includes processor 1302, processor readable storage media 1328, network interface unit 1330, an input/output interface 1332, hard disk drive 1334, video display adapter 1336, and memory 1326, all in communication with each other via bus 1338. In some embodiments, processor 1302 may include one or more central processing units.

As illustrated in FIG. 12, network computer 1300 also can communicate with the Internet, or some other communications network, via network interface unit 1330, which is constructed for use with various communication protocols including the TCP/IP protocol. Network interface unit 1330 is sometimes known as a transceiver, transceiving device, or network interface card (NIC).

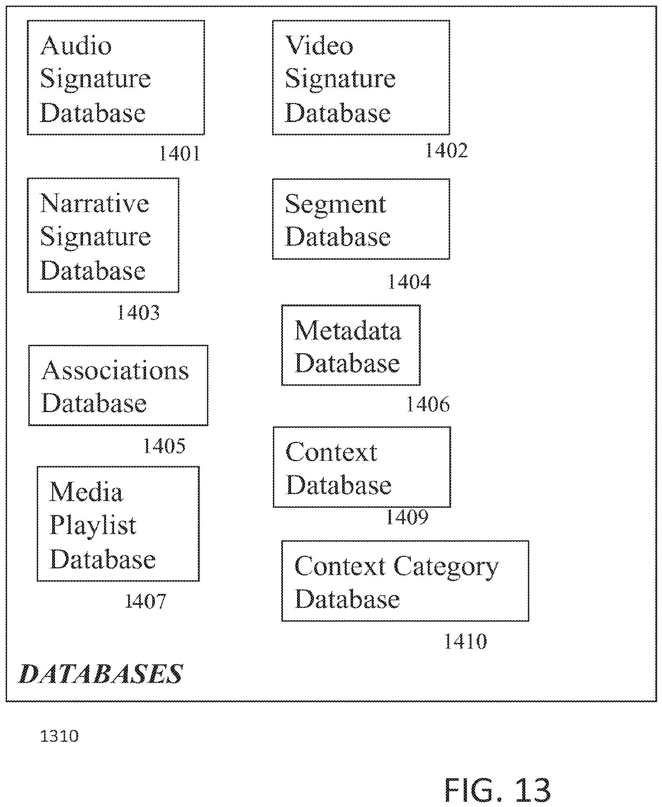

Network computer 1300 also comprises input/output interface 1332 for communicating with external devices, such as a keyboard, or other input or output devices not shown in FIGURE 13. Input/output interface 1332 can utilize one or more communication technologies, such as USB, infrared, Bluetooth ™, or the like.

Memory 1326 generally includes RAM 1304, ROM 1322 and one or more permanent mass storage devices, such as hard disk drive 1334, tape drive, optical drive, and/or floppy disk drive. Memory 1326 stores operating system 1306 for controlling the operation of network computer 1300. Any general-purpose operating system may be employed. Basic input/output system (BIOS) 1324 is also provided for controlling the low-level operation of network computer 1300.

Although illustrated separately, memory 1326 may include processor readable storage media 1328. Processor readable storage media 1328 may be referred to and/or include computer readable media, computer readable storage media, and/or processor readable storage device. Processor readable storage media 1328 may include volatile, nonvolatile, removable, and non-removable media implemented in any method or technology for storage of information, such as computer readable instructions, data structures, program modules, or other data. Examples of processor readable storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other media which can be used to store the desired information and which can be accessed by a computer.

Memory 1326 further includes one or more data storage 1308, which can be utilized by network computer 1300 to store, among other things, applications 1314 and/or other data such as content 1310. For example, data storage 1308 may also be employed to store information that describes various capabilities of network computer 1300. The information may then be provided to another computer based on any of a variety of events, including being sent as part of a header during a communication, sent upon request, or the like. Data storage 1308 may also be employed to store messages, web page content, or the like. At least a portion of the information may also be stored on another component of network computer 1300, including, but not limited to processor readable storage media 1328, hard disk drive 1334, or other computer readable storage medias (not shown) within client computer 1300.

Data storage 1308 may include a database, text, spreadsheet, folder, file, or the like, that may be configured to maintain and store user account identifiers, user profiles, email addresses, IM addresses, and/or other network addresses; or the like.

In at least one of the various embodiments, data storage 1308 may include databases 1310. In various embodiments, as shown in FIG. 13, databases include such as one or more signature databases (e.g. an audio signature database 1401, a video signature database 1402, a narrative signature database 1403), a segment database 1404, an associations database 1405, a metadata database 1406, a media playlist database 1407, a context database 1409, and a context category database 1410. Although the system shows the databases 1310 as included in the system and server 1300, one or more of the databases can be external to the server or system and operatively connected thereto.

Returning to FIG. 12, data storage 1308 may further include program code, data, algorithms, and the like, for use by a processor, such as processor 1302 to execute and perform actions. In one embodiment, at least some of data store 1308 might also be stored on another component of network computer 1300, including, but not limited to processor-readable storage media 1328, hard disk drive 1334, or the like.

Applications 1312 may include computer executable instructions, which may be loaded into mass memory and run on operating system 1306. Examples of application programs may include transcoders, schedulers, calendars, database programs, word processing programs, Hypertext Transfer Protocol (HTTP) programs, customizable user interface programs, IPSec applications, encryption programs, security programs, SMS message servers, IM message servers, email servers, account managers, and so forth. Applications 1312 may also include, for example, a website server 1314, a Common Segment Detector Application 1316, one or more Context Difference Detector Applications 1318, a Data Categorizer Application 1319, a Context Assignment Module 1320, and/or Context Filtering and Request Handler 1321.

Website server 1314 may represents any of a variety of information and services that are configured to provide content, including messages, over a network to another computer. Thus, website server 1314 can include, for example, a web server, a File Transfer Protocol (FTP) server, a database server, a content server, or the like. Website server 1314 may provide the content including messages over the network using any of a variety of formats including, but not limited to HTML, XML, Compact HTML (cHTML), Extensible HTML (xHTML), or the like.

In at least one of the various embodiments, Applications 1312 may be operative on Supplementary Content Delivery Server Computer 1114 of FIG. 12. Applications 1312 may employ processes, or parts of processes, similar to those described in conjunction with FIGS. 1- 10, to perform at least some of its actions.

One of ordinary skill in the art will appreciate that the architecture of the system is a non-limiting example that is illustrative of at least a portion of at least one of the various embodiments. As such, more or less components may be employed and/or arranged differently without departing from the scope of the innovations described herein.

It will be understood that each block, path or element of the flowchart and process illustrations, and combinations of blocks, paths, or elements in the flowchart and process illustrations, can be implemented by computer program instructions. These program instructions may be provided to a processor to produce a machine, such that the instructions, which execute on the processor, create means for implementing the actions specified in the illustrations. The computer program instructions may be executed by a processor to cause a series of operational steps to be performed by the processor to produce a computer-implemented process such that the instructions, which execute on the processor to provide steps for implementing the actions specified in the flowchart. The computer program instructions may also cause at least some of the operational steps shown in the blocks, paths or elements of the flowchart to be performed in parallel. Moreover, some of the steps may also be performed across more than one processor, such as might arise in a multi-processor computer system or even a group of multiple computer systems. In addition, one or more blocks, paths or elements, or combinations of blocks, paths or elements in the illustrations may also be performed concurrently with other blocks, paths or elements or combinations of blocks, paths or elements, or even in a different sequence than illustrated without departing from the scope of the invention.

Accordingly, blocks, paths and elements of the flowchart and process illustrations support combinations of means for performing the specified actions, combinations of steps for performing the specified actions and program instruction means for performing the specified actions. It will also be understood that each block or element of the flowchart and process illustrations, and combinations of blocks or elements in the flowchart and process illustrations, can be implemented by special purpose hardware-based systems, which perform the specified actions or steps, or combinations of special purpose hardware and computer instructions. The foregoing example should not be construed as limiting and/or exhaustive, but rather, an illustrative use case to show an implementation of at least one of the various embodiments of the invention.

## Claims

1. A computer system (900) for providing content, comprising:
one or more processors operative to execute instructions;
an operative connection to a plurality of databases (1401, 1402, 1403, 1404, 1405, 1406, 1407, 1409, 1410):
non-transitory memory operatively coupled to at least one of the processors including computer executable instructions; the one or more processors programmed at least to, when the program memory instructions are executed by the processors,
obtain a signature sample of primary media content;
compare the signature sample of the primary media content against a signature database to identify at least one or more segments associated with the signature;
select a particular segment of the primary media content;
identify context data for the particular segment;
search a graph of relationships between the context data for the primary media content and context data of other digital content;
select a fact concerning the other digital content based on a relevance factor; and
provide the fact to a content display device.

2. The system of Claim 1, wherein the particular segment is determined from a lull factor associated with the particular segment based on a data density of the particular segment.

3. The system of Claim 1, wherein the graph of the relationships includes nodes storing the fact concerning the other digital content and edges storing the relationships.

4. The system of Claim 3, wherein the relevance factor is based on a weighting factor associated with the nodes.

5. The system of Claim 4, wherein the relevance factor is based on a weighting factor associated with the edges.

6. The system of Claim 3, wherein a combined focal node is associated with more than one focal node, each focal node being related to the combined focal node by one degree on the graph.

7. The system of Claim 1, wherein the fact is selected from a particular node based upon one or more rules.

8. The system of Claim 8, wherein the one or more rules include a rule that the graphical distance between the particular node and another node is less than a predetermined distance on the graph.

9. A computerized method comprising, in a computer system (900) comprising one or more processors operative to execute instructions in non-transitory memory, the one or more processors programmed to, when the instructions are executed, perform the method comprising:
obtaining a signature sample of primary media content;
comparing the signature sample of the primary media content against a signature database to identify at least one or more segments associated with the signature;
selecting a particular segment of the primary media content; and
identifying the context data for the particular segment.
searching a graph of relationships between the context data for the primary media content and context data of other digital content;
selecting a fact concerning the other digital content based on a relevance factor; and
providing the fact to a content display device.

10. The method of Claim 9, wherein the particular segment is determined from a lull factor associated with the particular segment based on a data density of the particular segment.

11. The method of Claim 9, wherein the fact is selected from a particular node based upon one or more rules comprising at least a rule that the graphical distance between the particular node and another node is less than a predetermined distance on the graph.

12. The method of Claim 9, wherein the graph of the relationships includes nodes storing the fact concerning the other digital content and edges storing the relationships.

13. The method of Claim 12, a combined focal node is associated with more than one focal node, each focal node being related to the combined focal node by one degree on the graph.

14. The method of Claim 12, wherein the relevance factor is based on a weighting factor associated with the edges.

## Patentansprüche

1. Computersystem (900) zum Bereitstellen von Content, umfassend:
einen oder mehrere Prozessoren, die wirksam sind, um Anweisungen auszuführen;
eine wirksame Verbindung mit einer Mehrzahl von Datenbanken (1401, 1402, 1403, 1404, 1405, 1406, 1407, 1409, 1410);
einen nichtflüchtigen Speicher, der wirksam mit wenigstens einem der Prozessoren gekoppelt ist, die computerausführbare Anweisungen einschließen; wobei der eine oder die mehreren Prozessoren dazu programmiert sind, wenn die Programmspeicheranweisungen von den Prozessoren ausgeführt werden, wenigstens
eine Unterschriftsprobe eines primären Mediencontents zu erhalten;
die Unterschriftsprobe des primären Mediencontents mit einer Unterschriftsdatenbank zu vergleichen, um wenigstens ein oder mehrere mit der Unterschrift verbundene Segmente zu identifizieren;
ein bestimmtes Segment des primären Mediencontents auszuwählen;
Kontextdaten für das bestimmte Segment zu identifizieren;
ein Diagramm von Beziehungen zwischen den Kontextdaten für den primären Mediencontent und Kontextdaten eines anderen digitalen Contents zu durchsuchen;
einen den anderen digitalen Content betreffenden Fakt basierend auf einem Relevanzfaktor auszuwählen; und
den Fakt an eine Content-Anzeigevorrichtung bereitzustellen.

2. System nach Anspruch 1, wobei das bestimmte Segment aus einem mit dem bestimmten Segment verbundenen Pausenfaktor basierend auf einer Datendichte des bestimmten Segments bestimmt wird.

3. System nach Anspruch 1, wobei das Diagramm der Beziehungen Knoten, die den den anderen digitalen Content betreffenden Fakt speichern, und Kanten, die die Beziehungen speichern, einschließt.

4. System nach Anspruch 3, wobei der Relevanzfaktor auf einem mit den Knoten verbundenen Gewichtungsfaktor basiert.

5. System nach Anspruch 4, wobei der Relevanzfaktor auf einem mit den Kanten verbundenen Gewichtungsfaktor basiert.

6. System nach Anspruch 3, wobei ein kombinierter fokaler Knoten mit mehr als einem fokalen Knoten verbunden ist, wobei jeder fokale Knoten durch ein Grad auf dem Diagramm auf den kombinierten fokalen Knoten bezogen ist.

7. System nach Anspruch 1, wobei der Fakt basierend auf einer oder mehreren Regeln aus einem bestimmten Knoten ausgewählt wird.

8. System nach Anspruch 8, wobei die eine oder die mehreren Regeln eine Regel einschließen, dass der grafische Abstand zwischen dem bestimmten Knoten und einem anderen Knoten kleiner als ein vorbestimmter Abstand auf dem Diagramm ist.

9. Computerbasiertes Verfahren, umfassend, in einem Computersystem (900), das einen oder mehrere Prozessoren umfasst, die wirksam sind, um Anweisungen in einem nichtflüchtigen Speicher auszuführen, wobei der eine oder die mehreren Prozessoren dazu programmiert sind, wenn die Anweisungen ausgeführt werden, das Verfahren durchzuführen, umfassend:
Erhalten einer Unterschriftsprobe eines primären Mediencontents;
Vergleichen der Unterschriftsprobe des primären Mediencontents mit einer Unterschriftsdatenbank, um wenigstens ein oder mehrere mit der Unterschrift verbundene Segmente zu identifizieren;
Auswählen eines bestimmten Segments des primären Mediencontents; und
Identifizieren der Kontextdaten für das bestimmte Segment.
Durchsuchen eines Diagramms von Beziehungen zwischen den Kontextdaten für den primären Mediencontent und Kontextdaten eines anderen digitalen Contents;
Auswählen eines den anderen digitalen Content betreffenden Fakts basierend auf einem Relevanzfaktor; und
Bereitstellen des Fakts an eine Content-Anzeigevorrichtung.

10. Verfahren nach Anspruch 9, wobei das bestimmte Segment aus einem mit dem bestimmten Segment verbundenen Pausenfaktor basierend auf einer Datendichte des bestimmten Segments bestimmt wird.

11. Verfahren nach Anspruch 9, wobei der Fakt aus einem bestimmten Knoten basierend auf einer oder mehreren Regeln ausgewählt wird, die wenigstens eine Regel umfassen, dass der grafische Abstand zwischen dem bestimmten Knoten und einem anderen Knoten kleiner als ein vorbestimmter Abstand auf dem Diagramm ist.

12. Verfahren nach Anspruch 9, wobei das Diagramm der Beziehungen Knoten, die den den anderen digitalen Content betreffenden Fakt speichern, und Kanten, die die Beziehungen speichern, einschließt.

13. Verfahren nach Anspruch 12, ein kombinierter fokaler Knoten mit mehr als einem fokalen Knoten verbunden ist, wobei jeder fokale Knoten durch ein Grad auf dem Diagramm auf den kombinierten fokalen Knoten bezogen ist.

14. Verfahren nach Anspruch 12, wobei der Relevanzfaktor auf einem mit den Kanten verbundenen Gewichtungsfaktor basiert.

## Revendications

1. Système informatique (900) de fourniture de contenu, comprenant :
un ou plusieurs processeurs opérant pour exécuter des instructions ;
une connexion opérante vers une pluralité de bases de données (1401, 1402, 1403, 1404, 1405, 1406, 1407, 1409, 1410) ;
une mémoire non transitoire couplée de manière opérationnelle à au moins l'un des processeurs incluant des instructions exécutables par ordinateur; l'un ou plusieurs processeurs programmés au moins pour, lorsque les instructions de mémoire de programme sont exécutées par les processeurs,
obtenir un échantillon de signature d'un contenu média primaire ;
comparer l'échantillon de signature du contenu média primaire à une base de données de signatures pour identifier au moins un ou plusieurs segments associés à la signature ;
sélectionner un segment particulier du contenu média primaire ;
identifier des données de contexte pour le segment particulier ;
rechercher un graphe de relations entre les données de contexte pour le contenu média primaire et des données de contexte d'un autre contenu numérique ;
sélectionner un fait concernant l'autre contenu numérique sur la base d'un facteur de pertinence ; et
fournir le fait à un dispositif d'affichage de contenu.

2. Système selon la revendication 1, dans lequel le segment particulier est déterminé à partir d'un facteur d'accalmie associé au segment particulier sur la base d'une densité de données du segment particulier.

3. Système selon la revendication 1, dans lequel le graphe des relations inclut des nœuds stockant le fait concernant l'autre contenu numérique et des arêtes stockant les relations.

4. Système selon la revendication 3, dans lequel le facteur de pertinence est basé sur un facteur de pondération associé aux nœuds.

5. Système selon la revendication 4, dans lequel le facteur de pertinence est basé sur un facteur de pondération associé aux arêtes.

6. Système selon la revendication 3, dans lequel un nœud focal combiné est associé à plus d'un nœud focal, chaque nœud focal étant lié au nœud focal combiné par un degré sur le graphe.

7. Système selon la revendication 1, dans lequel le fait est sélectionné à partir d'un nœud particulier sur la base d'une ou plusieurs règles.

8. Système selon la revendication 8, dans lequel l'une ou plusieurs règles incluent une règle selon laquelle la distance graphique entre le nœud particulier et un autre nœud est inférieure à une distance prédéterminée sur le graphe.

9. Procédé informatisé comprenant, dans un système informatique (900) comprenant un ou plusieurs processeurs opérant pour exécuter des instructions dans une mémoire non transitoire, l'un ou plusieurs processeurs programmés pour, lorsque les instructions sont exécutées, effectuer le procédé comprenant :
une obtention d'un échantillon de signature d'un contenu média primaire ;
une comparaison de l'échantillon de signature du contenu média primaire à une base de données de signatures pour identifier au moins un ou plusieurs segments associés à la signature ;
une sélection d'un segment particulier du contenu média primaire ; et
une identification des données de contexte pour le segment particulier.
une recherche d'un graphe de relations entre les données de contexte pour le contenu média primaire et des données de contexte d'un autre contenu numérique ;
une sélection d'un fait concernant l'autre contenu numérique sur la base d'un facteur de pertinence ; et
une fourniture du fait à un dispositif d'affichage de contenu.

10. Procédé selon la revendication 9, dans lequel le segment particulier est déterminé à partir d'un facteur d'accalmie associé au segment particulier sur la base d'une densité de données du segment particulier.

11. Procédé selon la revendication 9, dans lequel le fait est sélectionné à partir d'un nœud particulier sur la base d'une ou plusieurs règles comprenant au moins une règle selon laquelle la distance graphique entre le nœud particulier et un autre nœud est inférieure à une distance prédéterminée sur le graphe.

12. Procédé selon la revendication 9, dans lequel le graphe des relations inclut des nœuds stockant le fait concernant l'autre contenu numérique et des arêtes stockant les relations.

13. Procédé selon la revendication 12, un nœud focal combiné est associé à plus d'un nœud focal, chaque nœud focal étant lié au nœud focal combiné par un degré sur le graphe.

14. Procédé selon la revendication 12, dans lequel le facteur de pertinence est basé sur un facteur de pondération associé aux arêtes.
